# EUROPEAN PATENT APPLICATION

(11) **EP 2 330 714 A2**
(43) Date of publication of application: **08.06.2011**
(21) Application number: 10187368.5
(22) Date of filing: 13.10.2010
(51) Int. Cl.: H02J 7/00

(54) **A charging circuit**

(30) Priority: 27.11.2009 CN 200920260862 U
(71) Applicant: Belton Electronics (Shenzhen) Co., Ltd., Shenzhen (CN)
(72) Inventor: Chan, Catherine Kok Yin, Hong Kong (CN); Li, Xiao, Shenzhen (CN)
(74) Representative: Marchant, Michael John

(57) **Abstract**

The present invention is applicable to the technical field of charging, and provides a charging circuit including an energy input, an input power detecting module, an electric energy storage, a boost module, a battery, a charging switch device, a PWM power isolating driver module, and a control module. In the present invention, when detecting a decrease in the input power through the input power detecting module, the control module of the charging circuit will control the boost module to boost the electric energy stored in the electric energy storage, thus the charging voltage for the battery is increased and the charging efficiency of the charging circuit is improved.

## Description

### Technical Field

The present utility model pertains to the technical field of charging, and particularly relates to a charging circuit.

### Background Technology

Solar energy, wind energy and other new energy sources have been widely utilized in people's lives. For example, solar energy charging circuit and wind energy charging circuit have been developed.

However, solar energy, wind energy and other new energy sources may sometimes be weakened due to natural factors. For example, in overcast days or in case of feeble wind, solar and wind energy will be weakened. Consequently, the input power of the charging circuit will be reduced, and the charging voltage will be inadequate to charge the battery, thereby reducing the charging efficiency of the charging circuit.

### Summary of the Invention

The present invention is aimed at providing a charging circuit to resolve the problem of reduced charging efficiency due to nature factors existing in prior art charging circuits.

The present invention is implemented as a charging circuit comprising an energy input, and the charging circuit further including:
an input power detecting module connected to a positive terminal and a ground terminal of the energy input, respectively;
an electric energy storage connected in parallel to the input power detecting module;
a boost module having an input terminal connected to the positive terminal of the energy input;
a battery having an anode connected to an output terminal of the boost module and a cathode connected with the ground terminal;
a charging switch device having an input terminal connected to the cathode of the battery and an output terminal connected to the input power detecting module;
a PWM (pulse width modulation) power isolating driver module having driving terminals respectively connected to a control terminal of the boost module and a control terminal of the charging switch device; and
a control module having a power supply terminal connected to the output terminal of the boost module, a detecting terminal connected to the input power detecting module, and an output terminal connected to the PWM power isolating driver module, which controls the boost module to boost the electric energy stored in the electric energy storage in accordance with an input power, so as to increase a charging voltage for charging the battery.

In the above structure, the input power detecting module includes a first resistor, a second resistor and a first current detector; the first resistor having a first terminal connected to the positive terminal of the energy input, and a second terminal respectively connected to a first terminal of the second resistor and a detecting terminal of the control module; the second resistor having a second terminal connected to both of the ground terminal of the energy input and a first terminal of the first current detector; the first current detector having a second terminal connected to the output terminal of the charging switch device, and an output terminal connected to the detecting terminal of the control module.

In the above structure, the electric energy storage includes a capacitor having a positive terminal connected to the first terminal of the first resistor and a negative terminal connected to the second terminal of the first current detector.

In the above structure, the boost module includes an inductor and a first MOSFET (metal-oxide-semiconductor field effect transistor), the inductor having a first terminal connected to the positive terminal of the energy input and a second terminal connected to both of a drain of the first MOSFET and the power supply terminal of the control module; the first MOSFET having a gate connected to a driving terminal of the PWM power isolating driver module and a source connected to the output terminal of the charging switch device.

In the above structure, the control module includes a power supply terminal connected to the second terminal of the inductor, a voltage detecting terminal connected to the second terminal of the first resistor, a current detecting terminal connected to the output terminal of the first current detector, a high frequency signal output terminal connected to the input terminal of the PWM power isolating driver module, and a ground terminal connected to the input terminal of the charging switch device.

In the above structure, the charging switch device employs a second MOSFET having a drain connected to the cathode of the battery, a gate connected to a driving terminal of the PWM power isolating driver module, and a source connected to the second terminal of the first current detector.

In the above structure, the PWM power isolating driver module includes a high frequency signal input terminal connected to the high frequency signal output terminal of the control module, a first driving terminal connected to the gate of the first MOSFET, and a second driving terminal connected to the gate of the second MOSFET.

In the above structure, the charging circuit further includes a diode, a third MOSFET, a triode, a load current detector and a load, the diode having an anode connected to the second terminal of the inductor and a cathode connected to the power supply terminal of the control module; the triode having a base connected to an enabling signal output terminal of the control module, an emitter connected to the ground and a collector connected to a gate of the third MOSFET; the third MOSFET having a drain connected to a second terminal of the load, a source connected to a first terminal of the load current detector; the load having a first terminal connected to a cathode of the diode; the load current detector having a second terminal connected to the ground and an output terminal connected to a load current detecting terminal of the control module.

In the present utility model, when detecting a decrease in the input power through the input power detecting module, the control module of the charging circuit will control the boost module to boost the electric energy stored in the electric energy storage, thus the charging voltage for the battery is increased and the charging efficiency of the charging circuit is improved.

### Brief Description of the Drawings

Figure 1 illustrates the structure of the charging circuit provided in the present utility model; and
Figure 2 illustrates an exemplary circuit diagram of the charging circuit provided in the present utility model.

### Detailed Description

The present utility model is described in the following with more details in conjunction with the Figures and examples thereof to clarify the objects, technical solutions and advantages of the present utility. However, it should be understood that the particular examples described herein is only to explain other than to limit the present utility model.

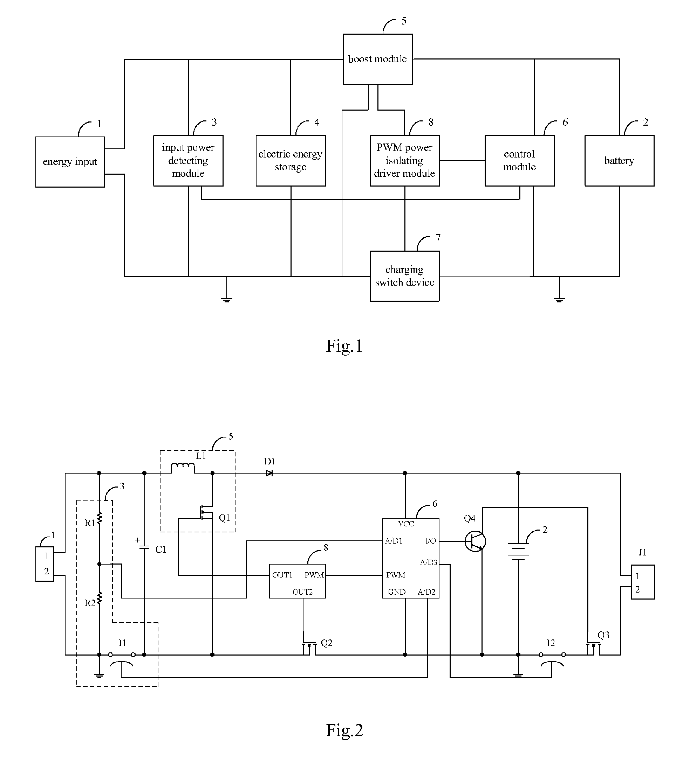

Figure 1 illustrates the structure of the charging circuit provided in the present utility model.

The charging circuit includes an energy input 1, which may be connected to a generator using new source of energy, such as a solar panel or a wind-driven generator. The charging circuit further includes:
an input power detecting module 3 connected to a positive terminal and a ground terminal of the energy input 1 respectively;
an electric energy storage 4 connected in parallel to the input power detecting module 3;
a boost module 5 having an input terminal connected to the positive terminal of the energy input 1;
a battery 2 having an anode connected to an output terminal of the boost module 5 and a cathode connected with the ground terminal;
a charging switch device 7 having an input terminal connected to the cathode of the battery 2 and an output terminal connected to the input power detecting module 3;
a PWM power isolating driver module 8 having driving terminals respectively connected to a control terminal of the boost module 5 and a control terminal of the charging switch device 7;
a control module 6 having a power supply terminal connected to the output terminal of the boost module 5, a detecting terminal connected to the input power detecting module 3, and an output terminal connected to the PWM power isolating driver module 8. The control module 6 controls the boost module 5 to boost the electric energy stored in the electric energy storage, so as to improve a charging voltage for charging the battery 2.

Figure 2 illustrates an exemplary circuit diagram of the charging circuit provided in the present utility model.

As an example of the present utility model, the input power detecting module 3 includes a first resistor R1, a second resistor R2 and a first current detector 11. A first terminal of the first resistor R1 is connected to the positive terminal of the energy input 1, a second terminal of the first resistor R1 is respectively connected to a first terminal of the second resistor R2 and a detecting terminal of the control module 6. A second terminal of the second resistor R2 is connected to both of the ground terminal of the energy input 1 and a first terminal of the first current detector 11. A second terminal of the first current detector 11 is connected to the output terminal of the charging switch device 7, and an output terminal of the first current detector 11 is connected to the detecting terminal of the control module 6.

The electric energy storage 4 includes a capacitor C1 having a positive terminal connected to the first terminal of the first resistor R1 and a negative terminal connected to the second terminal of the first current detector 11.

The boost module 5 includes an inductor L1 and a first MOSFET Q1. The inductor L1 has a first terminal connected to the positive terminal of the energy input 1 and a second terminal connected to both of a drain of the first MOSFET Q1 and the power supply terminal of the control module 6. The first MOSFET Q1 has a gate connected to a driving terminal of the PWM power isolating driver module 8 and a source connected to the output terminal of the charging switch device 7.

The control module 6 includes a power supply terminal VCC connected to the second terminal of the inductor L1, a voltage detecting terminal A/D1 connected to the second terminal of the first resistor R1, a current detecting terminal A/D2 connected to the output terminal of the first current detector 11, a high frequency signal output terminal PWM connected to the input terminal of the PWM power isolating driver module 8, and a ground terminal GND connected to the input terminal of the charging switch device 7.

The charging switch device 7 utilizes a second MOSFET Q2 having a drain connected to the cathode of the battery 2, a gate connected to a driving terminal of the PWM power isolating driver module 8, and a source connected to the second terminal of the first current detector 11.

The PWM power isolating driver module 8 includes a high frequency signal input terminal PWM connected to the high frequency signal output terminal of the control module 6, a first driving terminal OUT 1 connected to the gate of the first MOSFET Q1, and a second driving terminal OUT2 connected to the gate of the second MOSFET Q2.

The charging circuit further includes a diode D1, a third MOSFET Q3, a triode Q4, a load current detector 12 and a load J1**.** The diode D1 has an anode connected to the second terminal of the inductor L1 and a cathode connected to the power supply terminal VCC of the control module 6. The triode Q4 having a base connected to an enabling signal output terminal I/O of the control module 6, an emitter connected to the ground and a collector connected to a gate of the third MOSFET Q3. The third MOSFET Q3 has a drain connected to a second terminal of the load J1, a source connected to a first terminal of the load current detector 12. The load J1 has a first terminal connected to a cathode of the diode D 1. The load current detector 12 has a second terminal connected to the ground and an output terminal connected to a load current detecting terminal A/D3 of the control module 6.

The operational principle of the charging circuit in the present utility model is given below.

In normal charging operations, the inductor L1, the diode D1, the battery 2 and the second MOSFET Q2 forms a charging loop. The control module 6 controls the turning on/off of the second MOSFET Q2, and the power input from the energy input 1 may charge the battery 2 in PWM manner.

When the input power is relatively low, the electric energy input from the power input 1 is pre-stored in the capacitor C1. The second MOSFET Q2 keeps in an 'ON' state under the control of the control module 6, and a high frequency signal is supplied to the gate of the first MOSFET Q1 from the control module 6. A boost circuit 5 constituted of the inductor L1 and the first MOSFET Q1 begins to function to boost the electric energy stored in the capacitor C1, thereby increasing the charging voltage for the battery and improving the charging efficiency of the charging circuit.

In the present invention, when detecting a decrease in the input power through the input power detecting module, the control module of the charging circuit will control the boost module to boost the electric energy stored in the electric energy storage, thus the charging voltage for the battery is increased and the charging efficiency of the charging circuit is improved.

The description above is only to illustrate preferred examples of the present invention, but not to limit the present invention. Any amendments, equivalences and improvements made within the spirits and principles of the present utility fall in the scope of the present utility.

## Claims

1. A charging circuit comprising an energy input, **characterized in that** the charging circuit further comprises:
an input power detecting module connected to a positive terminal and a ground terminal of the energy input, respectively;
an electric energy storage connected in parallel to the input power detecting module;
a boost module having an input terminal connected to the positive terminal of the energy input;
a battery having an anode connected to an output terminal of the boost module and a cathode connected with the ground terminal;
a charging switch device having an input terminal connected to the cathode of the battery and an output terminal connected to the input power detecting module;
a PWM power isolating driver module having driving terminals respectively connected to a control terminal of the boost module and a control terminal of the charging switch device; and
a control module having a power supply terminal connected to the output terminal of the boost module, a detecting terminal connected to the input power detecting module, and an output terminal connected to the PWM power isolating driver module, which controls the boost module to boost the electric energy stored in the electric energy storage in accordance with the input power, so as to improve a charging voltage for charging the battery.

2. The charging circuit of claim 1, **characterized in that** the input power detecting module comprises a first resistor, a second resistor and a first current detector; the first resistor having a first terminal connected to the positive terminal of the energy input, and a second terminal respectively connected to a first terminal of the second resistor and a detecting terminal of the control module; the second resistor having a second terminal connected to both of the ground terminal of the energy input and a first terminal of the first current detector; the first current detector having a second terminal connected to the output terminal of the charging switch device, and an output terminal connected to the detecting terminal of the control module.

3. The charging circuit of claim 2, **characterized in that** the electric energy Storage comprises a capacitor having a positive terminal connected to the first terminal of the first resistor and a negative terminal connected to the second terminal of the first current detector.

4. The charging circuit of claim 3, **characterized in that** the boost module comprises an inductor and a first MOSFET, the inductor having a first terminal connected to the positive terminal of the energy input and a second terminal connected to both of a drain of the first MOSFET and the power supply terminal of the control module; the first MOSFET having a gate connected to a driving terminal of the PWM power isolating driver module and a source connected to the output terminal of the charging switch device.

5. The charging circuit of claim 4, **characterized in that** the control module comprises a power supply terminal connected to the second terminal of the inductor, a voltage detecting terminal connected to the second terminal of the first resistor, a current detecting terminal connected to the output terminal of the first current detector, a high frequency signal output terminal connected to the input terminal of the PWM power isolating driver module, and a ground terminal connected to the input terminal of the charging switch device.

6. The charging circuit of claim 5, **characterized in that** the charging switch device employs a second MOSFET having a drain connected to the cathode of the battery, a gate connected to a driving terminal of the PWM power isolating driver module, and a source connected to the second terminal of the first current detector.

7. The charging circuit of claim 6, **characterized in that** the PWM power isolating driver module comprises a high frequency signal input terminal connected to the high frequency signal output terminal of the control module, a first driving terminal connected to the gate of the first MOSFET, and a second driving terminal connected to the gate of the second MOSFET.

8. The charging circuit of claim 7, **characterized in that** the charging circuit further comprises a diode, a third MOSFET, a triode, a load current detector and a load, the diode having an anode connected to the second terminal of the inductor and a cathode connected to the power supply terminal of the control module; the triode having a base connected to an enabling signal output terminal of the control module, an emitter connected to the ground and a collector connected to a gate of the third MOSFET; the third MOSFET having a drain connected to a second terminal of the load, a source connected to a first terminal of the load current detector; the load having a first terminal connected to a cathode of the diode; the load current detector having a second terminal connected to the ground and an output terminal connected to a load current detecting terminal of the control module.
